# DEMANDE DE BREVET EUROPEEN

(11) **EP 1 177 953 A1**
(43) Date de publication de la demande: **06.02.2002**
(21) Numéro de dépôt: 01402056.4
(22) Date de dépôt: 30.07.2001
(51) Int. Cl.: B60R 21/20, B62D 1/10

(54) **Ensemble pour haut de colonne de direction de véhucule automobile avec liaison électrique entre la colonne et un équipment électrique**

(30) Priorité: 31.07.2000 FR 0010057
(71) Demandeur: SC2N, 78180 Montigny-le-Bretonneux (FR)
(72) Inventeur: Hallet, Michel, 14320 Clinchamps/Orne (FR); Van der Kamer, Teddy, 14000 Caen (FR)
(74) Mandataire: Martin, Jean-Jacques

(57) **Abrégé**

La présente invention concerne un ensemble pour haut de colonne de direction de véhicule automobile, caractérisé par le fait qu'il comprend :
- une roue dentée intermédiaire (700) montée en rotation autour d'un axe fixe (702) incliné par rapport à l'axe (302) de la colonne et comportant deux séries de dentures (712, 722) sur ses faces opposées,
- une roue dentée menante (600) centrée et montée en rotation autour de l'axe (102) du volant, comportant des moyens (610) de liaison mécanique en rotation avec le volant (100) et comportant des dentures (612) aptes à venir en prise avec une première série (712) de dentures de la roue dentée intermédiaire (700), et
- une roue dentée menée (800) montée en rotation autour d'un axe (302) parallèle à l'axe (102) du volant, comportant des moyens (810) de liaison en rotation avec l'arbre de direction (300), et comportant des dentures (812) aptes à venir en prise avec la seconde série de dentures (722) de la roue dentée intermédiaire (700).

## Description

La présente invention concerne le domaine des ensembles pour haut de colonne de direction de véhicule automobile.

Plus précisément, la présente invention concerne des moyens conçus pour assurer une liaison mécanique simple à rotation entre un volant rotatif et l'arbre de direction associé, tout en autorisant une liaison électrique entre des équipements électriques portés ou localisés dans le volant et la colonne de direction.

La présente invention trouve notamment, mais non exclusivement, application dans l'alimentation électrique de coussins gonflables de sécurité logés dans le volant d'un véhicule automobile.

De nos jours, la plupart de tels coussins gonflables de sécurité sont alimentés par un contacteur rotatif comprenant deux ensembles susceptibles de rotation relative solidaires respectivement de la colonne et du volant et comportant un ruban enroulé en spirale entre les deux ensembles et comportant des conducteurs électriques.

De tels contacteurs rotatifs ont déjà rendu de grands services. Cependant, ils ne donnent pas toujours satisfaction, notamment en raison de leur complexité.

La présente invention a pour but de proposer de nouveaux moyens permettant d'assurer à la fois la liaison mécanique précitée entre le volant et l'arbre de direction et la liaison électrique entre les équipements électriques et la colonne de direction.

Ce but est atteint dans le cadre de la présente invention grâce à un ensemble pour haut de colonne de direction de véhicule automobile comprenant :
- une roue dentée intermédiaire montée en rotation autour d'un axe fixe incliné par rapport à l'axe de la colonne de direction et comportant deux séries de dentures sur ses faces opposées,
- une roue dentée menante centrée et montée en rotation autour de l'axe du volant, comportant des moyens de liaison mécanique à rotation avec le volant et comportant des dentures aptes à venir en prise avec une première série de dents de la roue dentée intermédiaire, et
- une roue dentée menée montée en rotation autour d'un axe parallèle à l'axe du volant, comportant des moyens de liaison mécaniques à rotation avec l'arbre de direction et comportant des dentures aptes à venir en prise avec la seconde série de dentures de la roue dentée intermédiaire.

L'homme de l'art comprendra que l'inclinaison de la roue dentée intermédiaire permet de dégager un espace autorisant le passage de conducteurs électriques pour assurer la liaison électrique entre la colonne fixe et les équipements électriques portés ou logés dans le volant.

Très préférentiellement, dans le cadre de la présente invention, les équipements électriques portés ou logés dans le volant sont fixes par rapport à la colonne et donc désolidarisés de la jante du volant.

Très préférentiellement, ces équipements comprennent un coussin gonflable de sécurité.

Selon une autre caractéristique avantageuse de la présente invention, les différentes roues dentées ont des dentures de type conique.

Selon une autre caractéristique avantageuse de la présente invention, les deux séries de dents prévues sur les deux faces opposées de la roue intermédiaire sont décalées entre elles d'un demi pas, d'une face à l'autre, pour faciliter la réalisation de la roue intermédiaire.

Selon une autre caractéristique avantageuse de la présente invention, les diverses roues dentées sont réalisées par moulage de matériau thermoplastique.

D'autres caractéristiques, buts et avantages de la présente invention apparaîtront à la lecture de la description détaillée qui va suivre et en regard des dessins annexés, donnés à titre d'exemple non limitatif et sur lesquels :
- la figure 1 représente une vue générale en coupe axiale d'un système conforme à la présente invention,

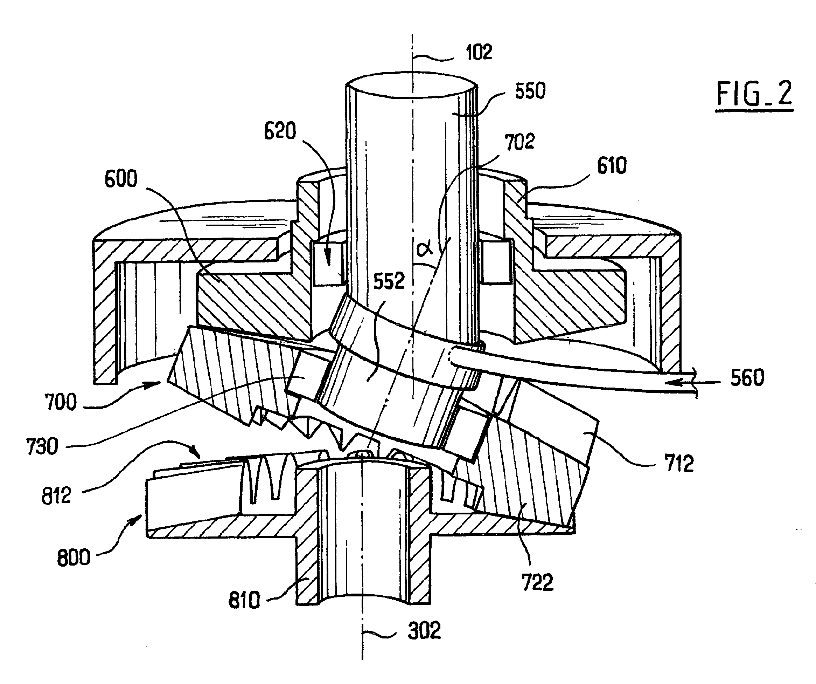

- la figure 2 représente une vue détaillée illustrant la coopération entre les diverses roues dentées,

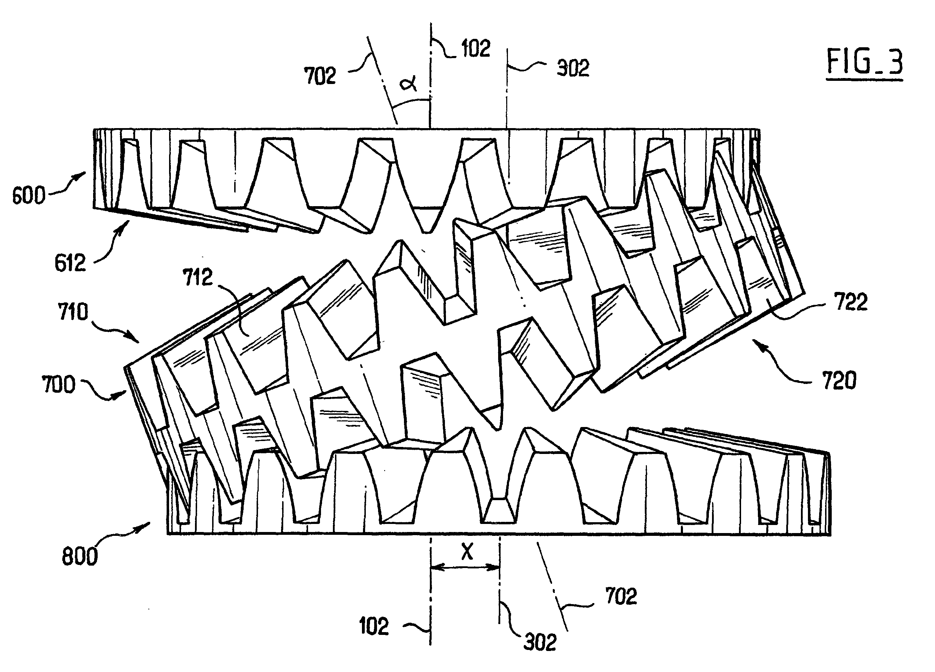

- la figure 3 représente une vue agrandie des trois roues dentées mises en oeuvre dans le cadre de la présente invention,
- la figure 4 représente une vue en coupe axiale d'une variante de réalisation conforme à la présente invention dans laquelle la roue dentée menante et la roue dentée menée sont coaxiales, et
- la figure 5 représente une vue schématique des moyens fonctionnels essentiels de la figure 4.

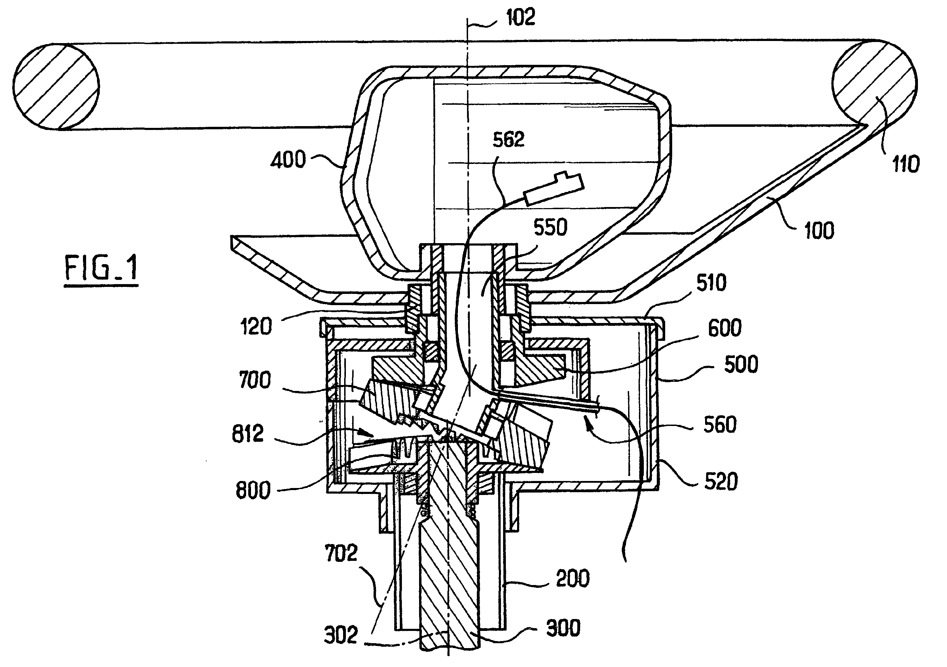

Sur la figure 1 annexée, on a référencé 100 le volant du véhicule automobile, 200 la colonne de direction et 300 l'arbre de direction logé dans cette colonne.

Plus précisément encore, la jante du volant est référée 110 tandis que le moyeu de celui-ci est référencé 120.

Par ailleurs, sur la figure 1, on a référencé 400 un ensemble d'équipements électriques placés à l'intérieur de la jante 110 du volant. L'équipement 400 peut faire l'objet de nombreuses variantes de réalisation. Il s'agit de préférence au moins d'un coussin gonflable de sécurité. Cependant, l'invention n'est pas limitée à cette application particulière. L'équipement électrique 400 concerné peut comprendre par exemple des moyens de commutation utilisés à des fins de commande, ou encore des moyens d'affichage ou témoins lumineux.

La géométrie et la localisation du volant 100 et de l'équipement électrique 400 notamment illustrées sur la figure 1 ne sont aucunement limitatives, ces moyens pouvant faire l'objet de nombreuses variantes de réalisation.

Dans le cadre de la présente invention, le ou les équipements électriques 400 sont de préférence fixes, c'est-à-dire qu'ils sont désolidarisés du volant 100 et reliés au contraire à la colonne de direction 200. La fixation mécanique de l'équipement électrique fixe 400 par rapport à la colonne 200 peut être opérée par tout moyen approprié. De préférence, cette liaison mécanique est opérée par l'intermédiaire d'un boîtier 500 solidaire du haut de la colonne 200.

Comme on l'a indiqué précédemment dans le cadre de la présente invention, les moyens assurant la liaison mécanique à rotation entre le volant 100 et l'arbre 300 comprennent une roue dentée menante 600 conçue pour être reliée au moyeu 120 du volant 100, une roue dentée intermédiaire 700 et une roue dentée menée 800 conçue pour être reliée à l'arbre de direction 300.

La roue dentée intermédiaire 700 est montée à rotation autour d'un axe 702 fixe incliné d'un angle α par rapport à l'axe 102 du volant 100 et à l'axe 302 de l'arbre 300.

Typiquement mais non limitativement, l'angle α est de l'ordre de 25°.

La roue dentée intermédiaire 700 comporte par ailleurs respectivement sur chacune de ses deux faces principales 710, 720, une série de dentures 712, 722.

La roue dentée menante 600 est centrée et montée en rotation autour de l'axe 102 du volant. Elle comporte des moyens 610 de liaison mécanique à rotation avec le moyeu 120 du volant. Ces moyens 610 peuvent faire l'objet de nombreuses variantes de réalisation. Il peut s'agir par exemple d'un fût centré sur l'axe 102 et cranté pour venir en prise en rotation avec le moyeu 120.

La roue dentée menante 610 comporte des dentures 612 aptes à venir en prise avec la première série 712 de dentures de la roue dentée intermédiaire 700 placée en regard.

On notera que selon le mode de réalisation particulier et non limitatif illustré sur les figures annexées, la roue dentée menante 600 est placée autour d'un fourreau 550 fixe centré sur l'axe 102 du volant 100 et relié au boîtier fixe 500 ou à la colonne fixe 200. La roue dentée menante 600 est guidée à rotation autour de ce fourreau 550 par tout moyen approprié, par exemple à l'aide d'un palier ou d'un roulement à billes ou tout moyen équivalent 620.

Le fourreau 550 se termine à son extrémité inférieure par un prolongement 552 cylindrique dont l'axe est incliné d'un angle α par rapport à l'axe 102. Ce tronçon cylindrique d'extrémité 552 assure le guidage à rotation de la roue intermédiaire 700 par tout moyen approprié, par exemple un roulement 730 ou un palier ou tout moyen équivalent.

La roue dentée menée 800 est placée sur le côté de la roue dentée intermédiaire 700 opposé à la roue dentée menante 600. Elle est montée en rotation autour de l'axe 302 de l'arbre de direction 300.

Selon le mode de réalisation illustré sur les figures annexées, cet axe 302 est décalé d'une amplitude X par rapport à l'axe 102 du volant 100. Cependant en variante, les deux axes 302, 102 peuvent être confondus.

La roue dentée menée 800 comporte des moyens de liaison mécanique à rotation avec l'arbre de direction 300. Ces moyens de liaison mécanique à rotation peuvent faire l'objet de nombreuses variantes de réalisation. Il peut s'agir par exemple d'un fût 810 cranté axialement pour venir en prise avec le sommet de l'arbre de direction 300.

La roue dentée menée 800 comporte par ailleurs sur sa face en regard de la roue dentée intermédiaire 700, des dentures 812 aptes à venir en prise avec la seconde série de dentures 722 de la roue dentée intermédiaire 700.

On notera que pour respecter l'inclinaison relative entre les différents axes 102, 702 et 302 des trois roues dentées 600, 700 et 800 impliquées, les sommets des dentures 612, 712, 722 et 812 s'appuient sur des surfaces coniques adéquates.

Le dispositif illustré sur les figures annexées comprend de préférence en outre, comme suggéré précédemment, un boîtier 500 formé très préférentiellement de deux coquilles 510, 520 qui logent les trois roues dentées 600, 700 et 800 et maintiennent l'ensemble du mécanisme, de sorte que les axes 102 et 302 soient parallèles, voire coaxiaux et maintiennent par ailleurs les deux roues dentées 600 et 800 respectivement menante et menée à une cote axiale prédéterminée adéquate pour assurer l'entraînement mécanique à rotation recherché.

L'homme de l'art comprendra aisément que l'entraînement à rotation de la roue dentée menante 600 par actionnement de la jante 110 du volant assure la rotation de la roue dentée intermédiaire 700 autour de l'axe 702 et de là la rotation de la roue dentée menée 800 autour de l'axe 302.

Par ailleurs, l'homme de l'art comprendra que l'inclinaison de la roue dentée intermédiaire 700 par rapport à l'axe 102 permet de dégager un passage 560 entre la roue dentée intermédiaire 700 et la roue dentée menante 600. Ce passage 560 permet de loger un faisceau du conducteur électriques 562 propre à assurer la liaison entre les équipements électriques 400 et tout élément solidaire de la colonne 200, voire du châssis du véhicule.

Bien entendu en variante, le passage ou canal 560 conçu pour le faisceau de liaison électrique peut être prévu non pas entre la roue dentée intermédiaire 700 et la roue dentée menante 600 mais entre la roue dentée intermédiaire 700 et la roue dentée menée 800, au niveau du passage libre résultant de l'inclinaison de la roue dentée intermédiaire 700 par rapport à la roue dentée menée 800.

Le système conforme à la présente invention permet entre autres de supprimer les transmissions électriques entre le volant 100 et la colonne 200 et d'obtenir une liaison directe avec l'équipement électrique 400, notamment le coussin gonflable de sécurité.

Bien entendu, la présente invention n'est pas limitée au mode de réalisation particulier qui vient d'être décrit mais s'étend à toute variante conforme à son esprit.

L'homme de l'art comprendra que le système conforme à la présente invention est composé de peu de pièces simples sans tolérance de fabrication particulière.

Les roues dentées 600, 700 et 800 peuvent être obtenues par moulage ou surmoulage de matériau thermoplastique.

Concernant la roue dentée intermédiaire 700, de préférence les deux séries de dentures 710 et 720 sont décalées entre elles d'un demi pas pour faciliter la fabrication.

Par ailleurs, dans le cadre de la présente invention, l'assemblage ne demande pas de technologie particulière et conduit à un système facilement automatisable.

Le système conforme à la présente invention conduit à un mécanisme comportant des dentures en prise importante, des dentures définies sur une même couronne de cylindre, et autorise un rattrapage de jeu axial aisé parempilement par exemple de rondelles ressort.

Comme on l'a indiqué précédemment, selon une variante intéressante de la présente invention, la roue menante et la roue menée, et par conséquent le volant et l'arbre de direction, peuvent être coaxiaux.

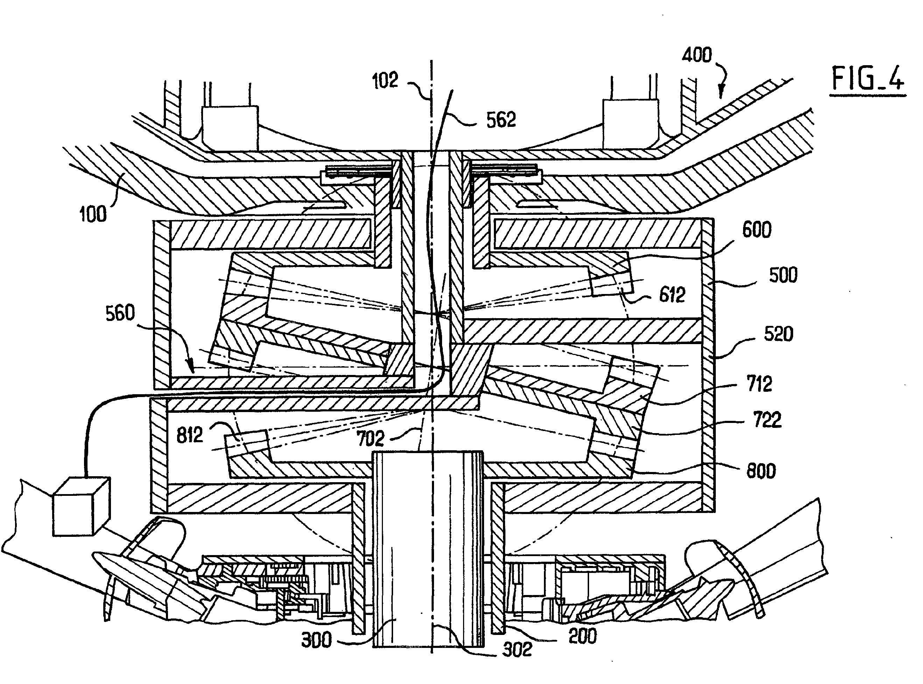

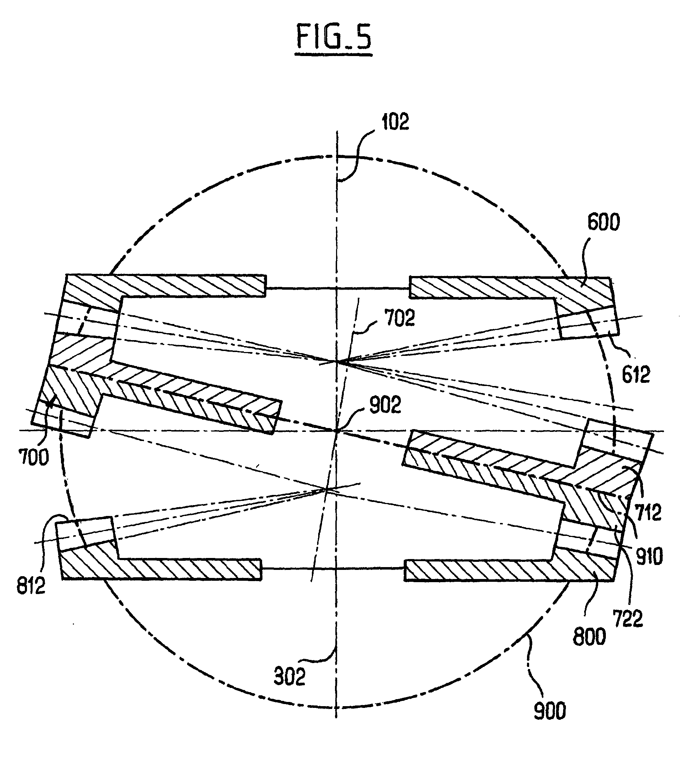

Une telle variante est illustrée sur les figures 4 et 5.

En effet sur les figures 4 et 5, les axes 102 et 302 sont alignés.

Pour permettre cette coaxialité, les diamètres primitifs des dentures 600, 700 et 800 doivent être inscrits sur une même sphère primitive (schématisée sous la référence 900 sur les figures 4 et 5). Par ailleurs les dentures intermédiaires 712 et 722 doivent être symétriques par rapport à un plan 910 passant par le centre 902 de la sphère primitive 900.

L'axe 702 des dentures intermédiaires 712 et 722 passe par le centre 902 de la sphère primitive 900.

Les dentures 600 et 712 d'une part et 722 et 800 d'autre part ne peuvent avoir le même nombre de dents, leurs plans primitifs respectifs sécant la sphère primitive 900 en des zones bien distinctes.

Si l'on respecte une symétrie géométrique entre les deux trains de dentures (600 et 712, 722 et 800) par un plan horizontal passant par le centre 902 de la sphère 900, nous obtenons un rapport de denture 600/712 = 800/722.

La démultiplication entre le volant 100 et l'arbre de colonne 300 est alors (600/712)x(722/800)=1.

## Revendications

1. Ensemble pour haut de colonne de direction de véhicule automobile, **caractérisé par le fait qu'**il comprend :
- une roue dentée intermédiaire (700) montée en rotation autour d'un axe fixe (702) incliné par rapport à l'axe (302) de la colonne et comportant deux séries de dentures (712, 722) sur ses faces opposées,
- une roue dentée menante (600) centrée et montée en rotation autour de l'axe (102) du volant, comportant des moyens (610) de liaison mécanique en rotation avec le volant (100) et comportant des dentures (612) aptes à venir en prise avec une première série (712) de dentures de la roue dentée intermédiaire (700), et
- une roue dentée menée (800) montée en rotation autour d'un axe (302) parallèle à l'axe (102) du volant, comportant des moyens (810) de liaison en rotation avec l'arbre de direction (300), et comportant des dentures (812) aptes à venir en prise avec la seconde série de dentures (722) de la roue dentée intermédiaire (700).

2. Ensemble selon la revendication 1, **caractérisé par le fait qu'**il comprend entre la roue dentée intermédiaire (700) et l'une des roues dentées coopérantes (600, 800) menante ou menée, un canal (560) recevant un faisceau de conducteurs électriques (562) relié à un équipement électrique (400) porté ou logé dans le volant (100).

3. Ensemble selon la revendication 2, **caractérisé par le fait que** le canal (560) est prévu entre la roue dentée intermédiaire (700) et la roue dentée menante (600).

4. Ensemble selon la revendication 2, **caractérisé par le fait que** le canal (560) est prévu entre la roue dentée intermédiaire (700) et la roue dentée menée (800).

5. Ensemble selon l'une des revendications 1 à 4, **caractérisé par le fait qu'**il comporte des équipements électriques portés ou logés dans le volant (100) et solidaires de la colonne de direction fixe (200).

6. Ensemble selon l'une des revendications 1 à 5, **caractérisé par le fait qu'**il comporte un coussin gonflable de sécurité placé à l'intérieur de la jante (110) du volant.

7. Ensemble selon la revendication 6, **caractérisé par le fait que** le coussin gonflable de sécurité est fixe par rapport à la colonne de direction (200).

8. Ensemble selon l'une des revendications 1 à 7, **caractérisé par le fait que** les dentures (612, 712, 722, 812) des roues dentées (600, 700, 800) ont leur sommet définissant une surface conique.

9. Ensemble selon l'une des revendications 1 à 8, **caractérisé par le fait que** les deux séries de dentures (712, 722) de la roue dentée intermédiaire (700) sont décalées d'un demi pas d'une série à l'autre.

10. Ensemble selon l'une des revendications 1 à 9, **caractérisé par le fait que** l'une au moins des roues dentées est réalisée par moulage de matériau thermoplastique.

11. Ensemble selon l'une des revendications 1 à 10, **caractérisé par le fait que** l'axe (702) de la roue dentée intermédiaire (700) est incliné d'environ 25° par rapport à l'axe (102) du volant.

12. Ensemble selon l'une des revendications 1 à 11, **caractérisé par le fait qu'**il comprend un fourreau (550) comprenant un tronçon cylindrique centré sur l'axe (102) du volant adapté pour guider à rotation la roue dentée menante (600) et prolongé à sa partie inférieure par un tronçon cylindrique (552) incliné assurant le guidage à rotation de la roue dentée intermédiaire (700).

13. Ensemble selon l'une des revendications 1 à 12, **caractérisé par le fait qu'**il comprend en outre un boîtier (500) assurant le confinement axial des roues dentées (600, 700, 800).

14. Ensemble selon l'une des revendications 1 à 13, **caractérisé par le fait que** l'axe (302) de la roue dentée menée (800) est décalé par rapport à l'axe (102) de la roue dentée menante (600).

15. Ensemble selon l'une des revendications 1 à 13, **caractérisé par le fait que** l'axe (302) de la roue dentée menée (800) est coaxial à l'axe (102) de la roue dentée menante (600).

16. Ensemble selon la revendication 15, **caractérisé par le fait que** les diamètres primitifs des dentures (600, 700, 800) sont inscrits sur une même sphère primitive (900).

17. Ensemble selon l'une des revendications 15 ou 16, **caractérisé par le fait que** les dentures (712, 722) de la roue dentée intermédiaire (700) sont symétriques par rapport à un plan (910) passant par le centre (902) de la sphère primitive (900).

18. Ensemble selon l'une des revendications 15 à 17, **caractérisé par le fait que** l'axe (702), des dentures (712 et 722) passe par le centre (902) de la sphère primitive (900).

19. Ensemble selon l'une des revendications 15 à 18, **caractérisé par le fait que** le produit du rapport de denture de la roue menante (600) sur la denture (712) associée de la roue dentée intermédiaire (700) d'une part, et de la second denture de la roue dentée intermédiaire (700) sur la denture de la roue menée (800) d'autre part, est égal à 1.
